Europäisches Patentamt

European Patent Office

Office européen des brevets

(11) Veröffentlichungsnummer: **0 253 944**
**B1**

(12) **EUROPÄISCHE PATENTSCHRIFT**

(45) Veröffentlichungstag der Patentschrift:
**04.04.90**

(21) Anmeldenummer: **86890214.9**

(22) Anmeldetag: **22.07.86**

(51) Int. Cl.⁴: **B01D 63/08**

(54) **Plattenmodul, Membrantrennvorrichtung mit solchen Plattenmodulen sowie Verfahren zur Herstellung eines Plattenmoduls.**

(43) Veröffentlichungstag der Anmeldung:
**27.01.88 Patentblatt 88/4**

(45) Bekanntmachung des Hinweises auf die Patenterteilung:
**04.04.90 Patentblatt 90/14**

(84) Benannte Vertragsstaaten:
**AT BE CH DE FR GB IT LI NL SE**

(56) Entgegenhaltungen:
**WO-A-82/00102**
**FR-A- 1 145 833**
**FR-A- 2 267 118**
**FR-A- 2 444 471**
**US-A- 2 686 154**
**US-A- 3 332 216**

(73) Patentinhaber: **VOGELBUSCH GESELLSCHAFT m.b.H., Blechturmgasse 11, A-1050 Wien(AT)**

(72) Erfinder: **Spet, Gerhard, Dipl.-Ing., Scariaweg 49, A-1160 Wien(AT)**

(74) Vertreter: **Wolfram, Gustav, Dipl.-Ing., Schwindgasse 7 P.O. Box 205, A-1041 Wien(AT)**

ACTORUM AG

## Beschreibung

Die Erfindung betrifft eine Membrantrennvorrichtung mit einer Mehrzahl von nebeneinander in einem Gehäuse angeordneten Plattenmodulen, wobei die Plattenmodule jeweils zwei Trennmembranen aufweisen, die an ihren Randbereichen rundum dicht miteinander verbunden sind und zwischen denen innere Abstandhalter, die von einer Lage aus Fasermaterial gebildet sind, vorgesehen sind, sowie ein Verfahren zur Herstellung eines Plattenmoduls einer solchen Membrantrennvorrichtung.

Eine Einrichtung dieser Art ist aus der US-A 3 332 216 bekannt. Solche zu Plattenpaketen aufgebaute Trennmembranen dienen zur Durchführung von Membrantrennverfahren, wie umgekehrter Osmose, Ultra- oder Mikrofiltration, Gastrennung und Pervaporation, wobei die aufzutrennenden mehrkomponentigen Medien, wie Flüssigkeiten, Lösungen oder Dämpfe, unter Druck an einer Trennmembran vorbeigeführt werden.

Während des Vorbeiströmens der mehrkomponentigen Medien an einer Trennmembran treten bestimmte Bestandteile davon als sogenanntes Permeat bevorzugt durch die Membranen.

Die Trennmembranen bestehen in vielen Fällen im wesentlichen aus einer dünnen, vergleichsweise durchlässigen Trägerfolie, auf deren einer Seite die aktive Beschichtung aufgebracht ist (sogenannte asymmetrische Trennmembran). Es gibt auch Trennmembranen, welche ausschließlich aus der aktiven Schicht selbst bestehen. Darüber hinaus sind sogenannte symmetrische Trennmembranen erhältlich, bei denen sich auf beiden Seiten einer Trägerfolie eine aktive Beschichtung befindet. Als aktive Beschichtungen sind eine große Zahl von Polymeren, wie Cellulosederivate, beispielsweise Celluloseacetat, verschiedenste Polyamide, Polysulfone und auch anorganische Materialien, wie Graphitoxid und Zirkonhydroxid bekannt. Die aktive Beschichtung weist bei Trennmembranen mit Trägerfolie im allgemeinen eine Stärke von einigen $10^{-3}$ bis $10^{-1}$ mm auf.

Beim Zusammenstellen eines Plattenpaketes ist gemäß der US-A 3 332 216 eine Trennmembran jeweils unter Zwischenlage einer Dämpfungsschicht aus Fasermaterial auf einen Öffnungen aufweisenden Träger – ein Gitter oder ein Lochblech – gelegt. Die Abdichtung der einzelnen so gebildeten Plattenmodule erfolgt jeweils durch dichtes Verbinden der Randbereiche der Trennmembranen.

Ein Problem stellt die Zusammenstellung einer Mehrzahl von Plattenmodulen zu einem Paket dar, da für eine dichte und die Trennmembranen schonende Verbindung der Innenräume der Plattenmodule und deren Anschluß an eine Versorgungsleitung, über die die Zufuhr der Medien erfolgt, gesorgt werden muß. Zu diesem Zweck ist es aus der US-A 3 332 216 bekannt, die übereinandergestapelten Plattenmodule direkt und dicht gegeneinanderzupressen und diesen Stapel mit durchgehenden Öffnungen zu versehen, über die die Medien zu- bzw. abgeleitet werden. Hierbei ist nachteilig, daß die Trennmembranen, die an die Preßstellen unmittelbar aneinander anliegen, großen mechanischen Belastungen ausgesetzt sind, insbesondere im an die Preßstellen benachbarten Bereich. Bei Bewegungen der Trennmembranen kann es zu einer Beschädigung derselben kommen, wodurch die Dichtheit des Paketes nicht mehr gewährleistet ist.

Die Erfindung bezweckt die Vermeidung dieser Nachteile und Schwierigkeiten und stellt sich die Aufgabe, eine Membrantrennvorrichtung der eingangs beschriebenen Art zu schaffen, bei der die einzelnen Plattenmodule zuverlässig dicht miteinander verbunden sind, wobei jedoch auf die Trennmembranen keine großen Dichtkräfte einwirken. Diese Aufgabe wird erfindungsgemäß dadurch gelöst, daß zwischen den einzelnen Plattenmodulen äußere, an den Trennmembranen anliegende Abstandhalter, die von einer Schicht aus Fasermaterial, wie ein Gewebe, Gewirk oder Vlies, aus organischen oder anorganischen Fasern gebildet sind, vorgesehen sind und daß die einzelnen Plattenmodule über in Öffnungen der Trennmembranen dichtend eingesetzte Anschlußstücke untereinander verbunden sind.

Durch die in die Öffnungen der Trennmembranen dichtend eingesetzten Anschlußstücke ist ein Aneinanderpressen der Trennmembranen nicht mehr erforderlich, und es wird die Möglichkeit geschaffen, zwischen den einzelnen Plattenmodulen Abstandhalter aus Fasermaterial vorzusehen.

Es ist an sich bekannt, in Membranflächen eines Plattenmoduls Öffnungen vorzusehen und in diese Öffnungen Anschlußstücke für die Zu- und Ableitung dichtend einzusetzen (WO-A 8 200 102). Hierbei ist jeweils ein Plattenmodul in ein starres Gehäuse eingesetzt. Diese Konstruktion ist platzaufwendig und bedingt ein hohes Gewicht. Zudem ist die Gefahr einer Beschädigung der Membranen durch das starre Gehäuse gegeben.

Werden bei einer Vorrichtung gemäß der Erfindung asymmetrische Trennmembranen eingesetzt, sind die aktiven Beschichtungen der Membranen im Inneren des Plattenmoduls einander zugewendet.

Als Fasermaterial für einen inneren Abstandhalter kommen alle gängigen Gewebe, Gewirke oder Vliese in Frage, welche gegen die durchgeleiteten Medien beständig sind. Besonders zweckmäßig kann eine Lage aus Glasfasergewebe vorgesehen sein.

Vorteilhaft sind als Anschlußstücke Röhrchen mit einseitig aufgebördeltem Ende eingesetzt, wobei das aufgebördelte Ende durch eine Klebstoffschicht mit der Innenseite einer Trennmembran verbunden ist und ein auf das Röhrchen passender Gegenhalter durch eine weitere Klebstoffschicht mit der Außenseite der Trennmembran verbunden ist.

Auf diese Weise ist eine stabile Anbringung der Anschlußstücke gesichert, ohne daß die Gefahr einer Verletzung der Trennmembranen besteht. Als Gegenhalter für ein Röhrchen mit kreisförmigem Querschnitt kann eine Scheibe mit etwas größerem Innendurchmesser als dem Außendurchmesser des Röhrchens dienen.

Als Klebstoffe kommen alle mit den verwendeten Materialien kompatiblen Produkte in Frage. Es können sowohl kalt aushärtende Ein- oder Mehrkomponentenkleber als auch heiß zu verarbeitende Klebstoffe verwendet werden. In vielen Fällen ist der Einsatz von beidseitig mit Klebstoff beschichteten Folienscheibchen zu diesem Zweck vorteilhaft.

Nach einer weiteren bevorzugten Ausführungsform weisen als Anschlußstücke eingesetzte Röhrchen ein Außengewinde auf und als Gegenhalter ist eine Mutter unter Zwischenschaltung einer Beilagscheibe aufgeschraubt.

Sowohl die Anschlußstücke bzw. Röhrchen als auch die Gegenhalter bzw. Muttern können aus Metall – beispielsweise rostfreiem Stahl oder Aluminium – oder aus einem geeigneten Kunststoff gefertigt sein, da die Trägermembranen beidseitig in Fasermaterial gebettet sind, so daß Beschädigungen derselben trotz der steifen Anschlußstücke nicht zu befürchten sind.

Sind von der Außenseite des Plattenmoduls gegengeschraubte Röhrchen als Anschlußstücke vorgesehen, so ist es möglich, statt der Klebstoffschichten zwischen dem aufgebördelten Ende eines Röhrchens und der Innenseite der Trennmembran sowie zwischen Beilagsscheibe und der Außenseite der Trennmembran Dichtscheibchen einzusetzen.

Die Anschlußstücke können miteinander dichtend verschweißt oder verklebt werden. Sind Röhrchen mit Außengewinde vorgesehen, können dichte Schraubverbindungen verschiedenster Art hergestellt werden. Es ist auch möglich, zur Verbindung Schlauchstücke aus elastischem Material über die Anschlußstücke zu schieben.

Vorzugsweise ist als äußerer Abstandhalter eine aus Glas-, Metall- oder Kunststoffasern aufgebaute Schicht vorgesehen.

Ein erfindungsgemäßes Verfahren zur Herstellung eines Plattenmoduls ist dadurch gekennzeichnet, daß in den Trennmembranflächen Öffnungen erzeugt werden, in welch letztere Anschlußstücke durch Verkleben mit beiden Seiten der Trennmembran und/oder Verschrauben dichtend eingesetzt werden, sodann zwei Trennmembranen so aufeinandergelegt werden, daß die Anschlußstücke nach außen abstehen, worauf die Randbereiche der beiden Trennmembranen rundum dicht miteinander verbunden werden, wobei eine Lage aus Fasermaterial zwischen die beiden Trennmembranen innerhalb der miteinander verbundenen Randbereiche eingebracht wird.

Die Öffnungen in den Trennmembranen können dabei mit geringstem Zeitaufwand beispielsweise durch Stanzen erzeugt werden. Auf jeder der beiden Membranflächen können eine oder mehrere Öffnungen beliebiger Umrißform vorgesehen sein, wobei es aus Durchströmungsgründen günstig ist, wenn die Öffnungen in der einen Membranfläche gegenüber den Öffnungen in der zweiten Membranfläche versetzt angeordnet sind.

Eine dichte Randverbindung kann insbesondere dadurch hergestellt werden, daß zunächst die zwei aufeinandergelegten Trennmembranen – unter Einfügen einer Lage aus Fasermaterial zwischen die Trennmembranen – an ihren Randbereichen miteinander verklebt werden, sodann die verklebten Ränder unter Zwischenfügung einer Klebstofflage gegenüber einer der beiden Trennmembranen eingebördelt und die so gebildete Bördelleiste unter Zwischenfügung einer zweiten Klebstofflage gegenüber der Trennmembran ein zweites Mal eingebördelt wird. Die zweimal eingebördelten Ränder können abschließend zusammengepreßt oder -gewalzt werden, wobei je nach verwendetem Klebstoff auch erhitzt werden kann.

Die Verklebungen können mit einem kalt aushärtenden Klebstoff, wie einem Silikonkleber, oder mit einem heiß zu verarbeitenden Klebstoff, wie einem Schmelzklebstoff oder einem Heißsiegelkleber, hergestellt werden.

Das Gehäuse der Membrantrennvorrichtung ist von sehr einfacher Konstruktion und wird lediglich zur seitlichen Abstützung des Stapels aus nebeneinander angeordneten erfindungsgemäßen Plattenmodulen benötigt, es kann aus Metall oder Kunststoff hergestellt sein.

Eine erfindungsgemäße Membrantrennvorrichtung ist sehr schnell aufzubauen, äußerst betriebssicher und leicht handhabbar, sie erzielt bei einfachster Konstruktion höchste Durchsatzleistungen ohne Auftreten irgendwelcher Dichtprobleme.

Die Erfindung wird in der Zeichnung noch näher erläutert, wobei in Fig. 1 ein Schnitt durch eine Ausführungsform einer Verbindungsstelle zwischen einem Anschlußstück und einer Trennmembran schematisch dargestellt ist. Fig. 2 ist eine gleichfalls schematische Schnittdarstellung zweier identischer erfindungsgemäßer Plattenmodule, welche über ihre Anschlußstücke miteinander verbunden und nebeneinander in einem Gehäuse angeordnet sind. Aus Fig. 3 ist schließlich eine stark vereinfachte Ansicht eines Beispieles für eine erfindungsgemäße Membrantrennvorrichtung ersichtlich.

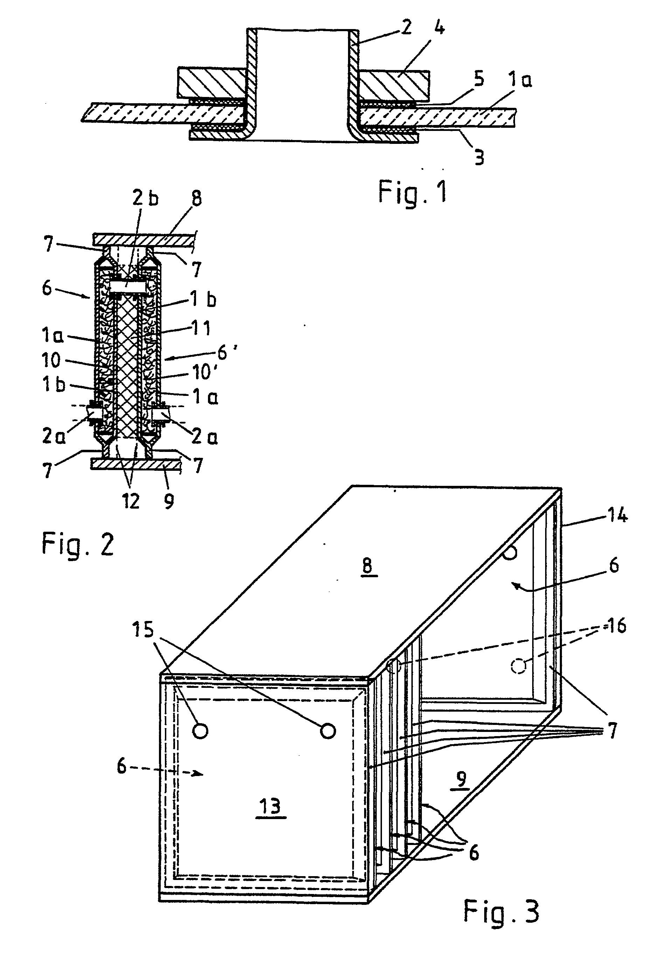

Gemäß Fig. 1 ist in eine Öffnung einer Trennmembran 1a ein Anschlußstück in Form eines Röhrchens 2 mit einseitig aufgebördeltem Ende eingesetzt. Das aufgebördelte Ende ist durch eine kreisringförmige Klebstoffschicht 3 mit der Innenseite der Trennmembran 1a verbunden und eine auf das Röhrchen 2 passende Scheibe 4 ist als Gegenhalter durch eine weitere Klebstoffschicht 5 mit der Außenseite der Trennmembran 1a verbunden.

In Fig. 2 sind die Plattenmodule allgemein mit 6 und 6' bezeichnet. Sie bestehen jeweils aus zwei übereinander angeordneten, annähernd quadratischen Trennmembranen 1a und 1b, welche an ihren Randbereichen 7 rundum dicht miteinander verbunden sind. Auf jeder Membranfläche eines Plattenmoduls 6 bzw. 6' sind bei der gezeigten Ausführungsform zwei Anschlußstücke 2a bzw. 2b dichtend in entsprechende Öffnungen eingesetzt, wobei die Öffnungen in jeder Membranfläche parallel zu einander gegenüberliegenden Kanten der Plattenmodule 6 bzw. 6' angeordnet sind. Die Anschlußstücke 2a in der Trennmembran 1a sind überdies jeweils versetzt zu den Anschlußstücken 2b in der Trennmembran 1b angebracht. Um eine dichtende Verbindung der Plattenmodule über die Anschlußstücke zu ermöglichen, müssen aufeinanderfolgende, identische Plattenmodule der beschriebenen Ausführungsform jeweils nur gewendet in ein Gehäuse eingesetzt werden, welches in Fig. 2 durch die Wände 8 und 9 angedeutet ist. Dies bringt außerordentliche Vorteile bei der Massenherstellung und beim Zusammenbau der Plattenmodule, da alle Module identisch ausgeführt werden können. Ähnliche Vorteile kann man natürlich auch mit beispielsweise rechteckigen Plattenmodulen bei entsprechender Gestaltung erzielen.

Zwischen den Trennmembranen 1a und 1b sind jeweils innere Abstandhalter 10, 10' aus durchlässigem Material vorgesehen. Auch zwischen den Plattenmodulen 6, 6' ist ein Abstandhalter 11 aus durchlässigem Material angeordnet, welcher gleichzeitig eine Stützfunktion ausübt und Ausnehmungen für die miteinander dicht verbundenen Anschlußstücke 2b hat. Zusätzlich sind aus dem veranschaulichten Beispiel noch strichliert gezeichnete Stützgitter 12 zwischen den Plattenmodulen 6, 6' und dem Abstandhalter 11 ersichtlich.

Die obere Abdeckung des Gehäuses ist auch in Fig. 3 mit 8 bezeichnet, die untere Abdeckung mit 9. Eine Mehrzahl von Plattenmodulen 6 ist zwischen zwei Stirnwänden 13, 14 nebeneinander angeordnet. Die Verbindung der einzelnen Plattenmodule 6 untereinander über ihre Anschlußstücke ist in der im Zusammenhang mit Fig. 2 erläuterten Art hergestellt und nicht dargestellt.

Die Zufuhr der Medien erfolgt durch Anschlüsse 15 in der Stirnwand 13, die Ableitung durch Anschlüsse 16 in der Stirnwand 14. Die Medien strömen auf einem im wesentlichen zick-zack-förmigen Weg durch sämtliche Plattenmodule 6, wobei das Permeat durch die Trennmembranen tritt und gesammelt wird.

## Patentansprüche

1. Membrantrennvorrichtung mit einer Mehrzahl von nebeneinander in einem Gehäuse (8, 9, 13, 14) angeordneten Plattenmodulen (6), wobei die Plattenmodule (6) jeweils zwei Trennmembranen (1a, 1b) aufweisen, die an ihren Randbereichen (7) rundum dicht miteinander verbunden sind und zwischen denen innere Abstandhalter (10, 10'), die von einer Lage aus Fasermaterial gebildet sind, vorgesehen sind, dadurch gekennzeichnet, daß zwischen den einzelnen Plattenmodulen (6) äußere, an den Trennmembranen (1a, 1b) anliegende Abstandhalter (11), die von einer Schicht aus Fasermaterial, wie ein Gewebe, Gewirk oder Vlies, aus organischen oder anorganischen Fasern gebildet sind, vorgesehen sind und daß die einzelnen Plattenmodule (6) über in Öffnungen der Trennmembranen (1a, 1b) dichtend eingesetzte Anschlußstücke (2, 2a, 2b) untereinander verbunden sind.

2. Membrantrennvorrichtung nach Anspruch 1, dadurch gekennzeichnet, daß als Anschlußstücke Röhrchen (2) mit einseitig aufgebördeltem Ende eingesetzt sind, wobei das aufgebördelte Ende durch eine Klebstoffschicht (3) mit der Innenseite einer Trennmembran (1a) verbunden ist und ein auf das Röhrchen (2) passender Gegenhalter (4) durch eine weitere Klebstoffschicht (5) mit der Außenseite der Trennmembran (1a) verbunden ist.

3. Membrantrennvorrichtung nach Anspruch 2, dadurch gekennzeichnet, daß die Röhrchen (2) ein Außengewinde aufweisen und als Gegenhalter (4) eine Mutter unter Zwischenschaltung einer Beilagscheibe aufgeschraubt ist.

4. Membrantrennvorrichtung nach einem oder mehreren der Ansprüche 1 bis 3, dadurch gekennzeichnet, daß als äußerer Abstandhalter (11) eine aus Glas-, Metall- oder Kunststoffasern aufgebaute Schicht vorgesehen ist.

5. Verfahren zur Herstellung eines Plattenmoduls einer Membrantrennvorrichtung nach wenigstens einem der Ansprüche 1 bis 3, dadurch gekennzeichnet, daß in den Trennmembranflächen Öffnungen erzeugt werden, in welch letztere Anschlußstücke (2, 2a, 2b) durch Verkleben mit beiden Seiten der Trennmembran (1a, 1b) und/oder Verschrauben dichtend eingesetzt werden, sodann zwei Trennmembranen (1a, 1b) so aufeinandergelegt werden, daß die Anschlußstücke (2, 2a, 2b) nach außen abstehen, worauf die Randbereiche (7) der beiden Trennmembranen (1a, 1b) rundum dicht miteinander verbunden werden, wobei eine Lage aus Fasermaterial zwischen die beiden Trennmembranen (1a, 1b) innerhalb der miteinander verbundenen Randbereiche (7) eingebracht wird.

## Claims

1. Membrane separation arrangement with a plurality of plate modules (6) adjacently arranged in a housing (8, 9, 13, 14), each plate module (6) including two separation membranes (1a, 1b), whose rim regions (7) are interconnected with each other so as to be tight all around, and between which inner spacers (10, 10') formed of a layer of fibrous material are provided, characterised in that between the individual plate modules (6) outer spacers (11) contacting the separation membranes (1a, 1b) and formed of a layer of fibrous material, such as a woven fabric, knitted fabric or nonwoven of organic or inorganic fibres, are provided and that the individual plate modules (6) are interconnected via connection pieces (2, 2a, 2b) sealingly inserted in openings of the separation membranes (1a, 1b).

2. Membrane separation arrangement according to claim 1, characterised in that the connection pieces are tubelets (2) having one end flanged-up, the flanged-up end being connected with the inner side of a separation membrane (1a) by a glue layer (3) and a counter-holder (4) fitting over the tubelet (2) being connected with the outer side of the separation membrane (1a) by means of a further glue layer (5).

3. Membrane separation arrangement according to claim 2, characterised in that the tubelets (2) have an outer thread and the counter-holder (4) is formed by a nut screwed thereon with a washer interposed therebetween.

4. Membrane separation arrangement according to one or several of claims 1 to 3, characterised in that the outer spacers (11) are comprised of a layer made of glass, metal or synthetic fibres.

5. Method of producing a plate module of a membrane separation arrangement according to at least one of claims 1 to 3, characterised in that openings are produced in the separation membrane surfaces, into which connection pieces (2, 2a, 2b) are sealingly inserted by gluing with the two sides of the separation membrane (1a, 1b) and/or by screwing, that thereupon two separation membranes (1a, 1b) are superposed in a manner that the connection pieces (2, 2a, 2b) project outwardly, whereupon the rim regions (7) of the two separation membranes (1a, 1b) are interconnected so as to be tight all around, a layer of fibrous material being introduced between the two separation membranes (1a, 1b) within the rim regions (7) interconnected with each other.

## Revendications

1. Dispositif à membranes séparatrices comportant une pluralité de modules en forme de plateaux (6) disposés les uns à côté des autres dans un carter (8, 9, 13, 14), étant précisé que les modules en forme de plateaux (6) présentent chacun deux membranes séparatrices (1a, 1b) qui sont reliées l'une à l'autre tout autour sur leurs zones de bordures (7) et entre lesquelles sont prévus des écarteurs intérieurs (10, 10') qui sont formés d'une couche de matériau fibreux, caractérisée en ce qu'entre les différents modules en forme de plateaux (6) sont prévus des écarteurs extérieurs (11) qui s'appuient contre les membranes séparatrices (1a, 1b) et qui sont formés d'une couche d'un matériau fibreux comme un tissu, un tricot ou un voile en fibres organiques ou non organiques; et en ce que les différents modules en forme de plateaux (6) sont reliés entre eux au moyen de pièces de raccordement (2, 2a, 2b) insérés, de façon étanche, dans des ouvertures des membranes séparatrices (1a, 1b).

2. Dispositif à membranes séparatrices selon la revendication 1, caractérisé en ce que, comme pièces de raccordement, on utilise des petits tubes (2) à extrémité à collet rabattu d'un côté, étant précisé que l'extrémité à collet rabattu est réunie, par une couche d'adhésif (3), avec la face intérieure d'une membrane séparatrice (1a) et qu'un contre-appui (4), ajusté sur le petit tube (2), est réuni, par une autre couche d'adhésif (5), avec la face extérieure de la membrane séparatrice (1a).

3. Dispositif à membranes séparatrices selon la revendication 2, caractérisé en ce que les petites tubes (2) présentent un filetage extérieur et en ce qu'en tant que contre-appui (4), on y visse un écrou avec interposition d'une rondelle de calage.

4. Dispositif à membranes séparatrices selon l'une ou plusieurs des revendications 1 à 3, caractérisé en ce que comme écarteur extérieur (11), on prévoit une couche constituée de fibres de verre, de métal ou de plastique.

5. Procédé de fabrication d'un module en forme de plateau d'un dispositif à membranes séparatrices selon au moins l'une des revendications 1 à 3, caractérisé en ce que dans les faces des membranes séparatrices on crée des ouvertures dans lesquelles on insère des pièces de raccordement (2, 2a, 2b), de façon étanche, par collage avec les deux faces de la membrane séparatrice (1a, 1b), et/ou par vissage; en ce qu'ensuite on place l'une sur l'autre deux membranes séparatrices (1a, 1b) de façon que les pièces de raccordement (2, 2a, 2b) dépassent vers l'extérieur, après quoi on réunit ensemble, de façon étanche, tout autour, les zones de bordure (7) des deux membranes séparatrices (1a, 1b), une couche d'un matériau fibreux étant rapportée entre les deux membranes séparatrices (1a, 1b), à l'intérieur des zones de bordure (7) réunies l'une à l'autre.

Fig. 1

Fig. 2

Fig. 3